(19) **Europäisches Patentamt / European Patent Office / Office européen des brevets**

(11) **EP 3 896 419 B1**

(12) **FASCICULE DE BREVET EUROPEEN**

(45) Date de publication et mention
de la délivrance du brevet:
**08.03.2023   Bulletin 2023/10**

(51) Classification Internationale des Brevets (IPC):
**G01M 3/28** *(2006.01)*      **E03B 7/00** *(2006.01)*
**E03B 7/07** *(2006.01)*

(21) Numéro de dépôt: **21167751.3**

(22) Date de dépôt: **09.04.2021**

(52) Classification Coopérative des Brevets (CPC):
**G01M 3/2807; E03B 7/003; E03B 7/072**

(54) **ÉVALUATION D'UNE QUANTITÉ DE FLUIDE PERDUE DANS UN RÉSEAU DE DISTRIBUTION**

AUSWERTUNG EINER IN EINEM VERTEILUNGSNETZ VERLORENEN FLUIDMENGE

ASSESSMENT OF AN AMOUNT OF FLUID LOST IN A DISTRIBUTION NETWORK

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **14.04.2020   FR 2003699**

(43) Date de publication de la demande:
**20.10.2021   Bulletin 2021/42**

(73) Titulaire: **Sagemcom Energy & Telecom SAS
92500 Rueil-Malmaison (FR)**

(72) Inventeur: **TEBOULLE, Henri
92500 Rueil Malmaison (FR)**

(74) Mandataire: **Lavaud, Thomas et al
Cabinet Boettcher
16, rue Médéric
75017 Paris (FR)**

(56) Documents cités:
**EP-A2- 0 188 911        US-A1- 2009 007 968
US-A1- 2013 197 833      US-A1- 2015 330 863
US-A1- 2018 275 011**

Processed by Luminess, 75001 PARIS (FR)

**Description**

L'invention concerne le domaine des réseaux de distribution de fluide comprenant des compteurs communicants.

ARRIERE PLAN DE L'INVENTION

Les compteurs d'eau modernes, aussi appelés « compteurs d'eau communicants », comprennent bien sûr un dispositif de mesure destiné à mesurer la consommation d'eau d'une installation d'eau, mais aussi un module de traitement et un module de communication.

Le module de traitement permet au compteur d'eau de réaliser un certain nombre de fonctionnalités, et notamment d'analyser des données diverses, relatives par exemple à la consommation d'eau de l'installation, à la facturation du client, à l'état du réseau de distribution d'eau, ou bien au fonctionnement du compteur d'eau lui-même.

Le module de communication, quant à lui, permet au compteur d'eau de communiquer avec un Système d'Information (SI) du gestionnaire du réseau, éventuellement via un concentrateur de données, une passerelle, ou bien un autre compteur (tel qu'un compteur d'eau communicant de quartier). Le module de communication est susceptible de mettre en oeuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc.

Il est important d'être capable d'évaluer la quantité d'eau perdue dans un réseau de distribution d'eau, pour pouvoir détecter et localiser une fuite lorsque cette quantité d'eau perdue est anormalement élevée.

Plusieurs méthodes ont été envisagées pour évaluer la quantité d'eau perdue dans un réseau de distribution d'eau, mais aucune ne donne entière satisfaction.

Le document US0188911 décrit une méthode de détection de fuite dans un réseau de distribution de fluide ayant plusieurs entrées et sorties de fluide dans laquelle on mesure les quantités de fluide entrant et sortant pour en calculer la différence qui est ensuite intégrée sur le temps et comparée à une valeur de référence.

L'une de ces méthodes consiste à se baser sur un indicateur égal au rapport entre le volume d'eau distribué et le volume d'eau consommé comptabilisé par les différents compteurs d'eau du réseau. Cette méthode ne permet cependant pas de distinguer, d'une part, les pertes d'eau dues à des fuites, et d'autre part, les tirages d'eau réalisés par les services publics (pompiers, piscine, etc.) ou même les vols d'eau (qui, même s'ils sont problématiques, ne signifient pas qu'une intervention urgente est nécessaire pour réparer un élément du réseau de distribution d'eau).

OBJET DE L'INVENTION

L'invention a pour objet d'évaluer précisément une quantité de fluide perdue dans un réseau de distribution de fluide.

RESUME DE L'INVENTION

En vue de la réalisation de ce but, on propose un procédé d'évaluation d'une quantité de fluide perdue dans un réseau de distribution de fluide comprenant un conduit principal auquel est raccordé un compteur de fluide principal, et des conduits secondaires issus du conduit principal et auxquels sont raccordés des compteurs de fluide secondaires, le procédé d'évaluation comprenant les étapes suivantes, répétées par périodes de mesure successives découpées chacune en intervalles temporels, de :

- pour chaque intervalle temporel d'une période de mesure donnée, acquérir une mesure principale réalisée par le compteur de fluide principal et représentative d'une quantité de fluide distribuée via le conduit principal au cours dudit intervalle temporel, et, pour chaque compteur de fluide secondaire, acquérir une mesure secondaire réalisée par ledit compteur de fluide secondaire et représentative d'une quantité de fluide distribuée via le conduit secondaire auquel est raccordé ledit compteur de fluide secondaire au cours dudit intervalle temporel ;
- calculer, pour chaque intervalle temporel de la période de mesure donnée, une différence de mesures égale à une différence entre la mesure principale et la somme des mesures secondaires ;
- déterminer une valeur minimum des différences de mesures sur la période de mesure donnée ;
- évaluer la quantité de fluide perdue sur la période de mesure donnée à partir de la valeur minimum.

La valeur minimum des différences de mesures est une estimation très précise de la quantité de fluide perdue, dans le réseau de distribution de fluide, au cours d'une durée égale à la durée d'un intervalle temporel. Le procédé selon l'invention permet d'exclure de cette estimation les tirages et les vols de fluide.

On propose de plus un procédé tel que précédemment décrit, dans lequel l'évaluation de la quantité de fluide perdue sur la période de mesure donnée est égale à la valeur minimum multipliée par le nombre d'intervalles temporels contenus dans la période de mesure donnée.

On propose de plus un procédé tel que précédemment décrit, dans lequel, pour chaque compteur de fluide secondaire, on évalue une première mesure secondaire, représentative d'une quantité de fluide distribuée via le conduit secondaire auquel est raccordé ledit compteur de fluide secondaire au cours du premier intervalle temporel de la période de mesure donnée, en utilisant la formule suivante :

$$\Delta i_{j\_0} = Ci_{j+1} - \left(Ci_j + \sum_{k=1}^{k=K-1} \Delta i_{j\_k}\right)$$

où :

- j est la période de mesure donnée ;
- K est le nombre d'intervalles temporels dans chaque période de mesure ;
- $\Delta i_{j\_0}$ est la première mesure secondaire ;
- $Ci_j$ est une mesure secondaire totale représentative d'une quantité de fluide distribuée via le conduit secondaire auquel est raccordé ledit compteur de fluide secondaire jusqu'au début de la période de mesure donnée ;
- $Ci_{j+1}$ est une mesure secondaire totale représentative d'une quantité de fluide distribuée via le conduit secondaire auquel est raccordé ledit compteur de fluide secondaire jusqu'au début de la période de mesure suivant la période de mesure donnée ;
- les $\Delta i_{j\_k}$ sont les mesures secondaires pour les intervalles temporels de la période de mesure donnée suivant le premier intervalle temporel.

On propose de plus un procédé tel que précédemment décrit, dans lequel, pour le compteur de fluide principal, on évalue une première mesure principale, représentative d'une quantité de fluide distribuée via le conduit principal au cours du premier intervalle temporel de la période de mesure donnée, en utilisant la formule suivante :

$$\Delta CCQ_{j\_0} = CQ_{j+1} - \left(CQ_j + \sum_{k=1}^{k=K-1} \Delta CCQ_{j\_k}\right)$$

où :

- j est la période de mesure donnée ;
- K est le nombre d'intervalles temporels dans chaque période de mesure ;
- $\Delta CCQ_{j\_0}$ est la première mesure principale ;
- $CQ_j$ est une mesure principale totale représentative d'une quantité de fluide distribuée via le conduit principal jusqu'au début de la période de mesure donnée ;
- $CQ_{j+1}$ est une mesure principale totale représentative d'une quantité de fluide distribuée via le conduit principal jusqu'au début de la période de mesure suivant la période de mesure donnée ;
- les $\Delta CCQ_{j\_k}$ sont les mesures principales pour les intervalles temporels de la période de mesure donnée suivant le premier intervalle temporel.

On propose de plus un procédé tel que précédemment décrit, dans lequel chaque période de mesure a pour durée un jour et dans lequel chaque intervalle temporel a pour durée une heure.

On propose de plus un procédé tel que précédemment décrit, le compteur de fluide principal et les compteurs de fluide secondaires étant des compteurs d'eau.

On propose aussi un dispositif comprenant un module de communication agencé pour recevoir les mesures principales réalisées par le compteur de fluide principal et les mesures secondaires réalisées par les compteurs de fluide secondaires, ainsi qu'un module de traitement agencé pour mettre en oeuvre le procédé précédemment décrit.

On propose aussi un dispositif tel que précédemment décrit, le dispositif étant un Système d'Information ou une passerelle ou un concentrateur de données ou un compteur de fluide communicant de quartier.

On propose en outre un programme d'ordinateur comprenant des instructions qui conduisent le dispositif précédemment décrit à exécuter les étapes du procédé qui vient d'être décrit.

On propose en outre un support d'enregistrement lisible par ordinateur, sur lequel est enregistré le programme d'ordinateur précédemment décrit.

L'invention sera mieux comprise à la lumière de la description qui suit d'un mode de mise en oeuvre particulier non limitatif de l'invention.

BREVE DESCRIPTION DU DESSIN

Il sera fait référence au dessin annexé de la figure unique :

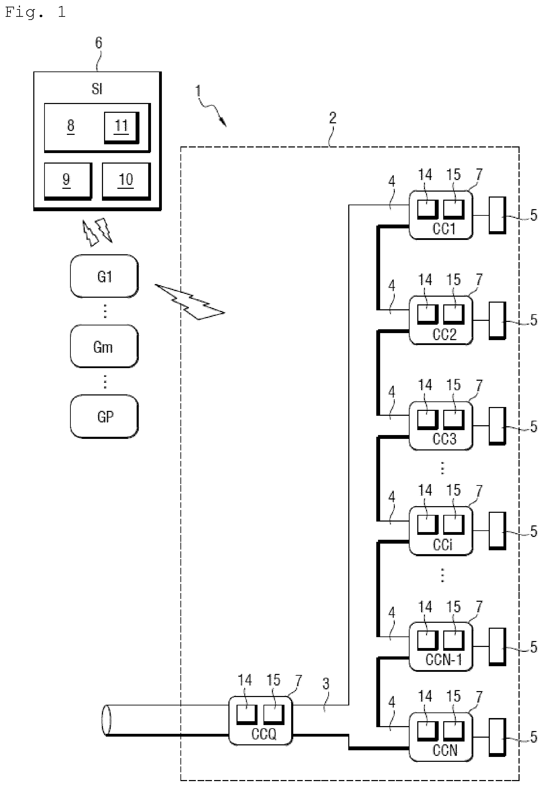

[Fig. 1] la figure 1 représente un réseau de distribution d'eau dans lequel est mise en oeuvre l'invention.

DESCRIPTION DETAILLEE DE L'INVENTION

En référence à la figure 1, le procédé d'évaluation d'une quantité de fluide perdue dans un réseau de distribution de fluide est ici mis en oeuvre dans un réseau de distribution d'eau 1 destiné à alimenter en eau un « quartier » 2, c'est-à-dire une zone géographique comprenant une pluralité d'installations d'eau situées chacune par exemple dans une habitation, un restaurant, un commerce, etc.
Le réseau de distribution d'eau 1 comporte un conduit principal 3 et des conduits secondaires 4 reliés chacun à une installation d'eau 5 distincte.
Le réseau de distribution d'eau 1 comporte de plus un Système d'Information (SI) 6 du gestionnaire du réseau de distribution d'eau, des passerelles Gm et des compteurs d'eau 7.
Le SI 6 comprend un serveur d'application 8, un serveur LNS 9 (pour *LoRa Network Server*) et un premier module de communication 10.
Le serveur d'application 8 comporte un premier module de traitement 11 comprenant au moins un premier composant de traitement adapté à exécuter des instructions d'un programme pour mettre en oeuvre certaines étapes du procédé d'évaluation qui vont être décrites ci-après. Le premier composant de traitement est par exemple un processeur, un microcontrôleur, ou bien un circuit logique programmable tel qu'un FPGA (pour *Field Programmable Gate Arrays*) ou un ASIC (pour *Application Spécifie Integrated Circuit*).
Le serveur LNS 9 est destiné notamment à gérer les communications avec l'ensemble des passerelles Gm et avec tous les compteurs d'eau 7 auxquels le serveur LNS 9 est connecté. Le serveur LNS 9 communique directement avec les passerelles Gm, et avec les compteurs d'eau 7 via les passerelles Gm. Le serveur LNS 9 utilise le premier module de communication 10, qui permet ici de mettre en oeuvre une communication radio transportant les trames du protocole LoRa, pour communiquer avec les passerelles Gm.
Les passerelles Gm, ou *gateways,* sont des passerelles LoRa. La variable m varie de 1 à P.
Les passerelles Gm comportent chacune un module de communication leur permettant de communiquer avec le serveur LNS 9 via une communication radio transportant les trames du protocole LoRa, et avec des compteurs d'eau 7 via une communication radio qui utilise le protocole LoRa.
Toutes les communications entre le SI 6 et les compteurs d'eau 7, montantes ou descendantes, transitent par les passerelles Gm.
Parmi les compteurs d'eau 7, on trouve ici un compteur d'eau principal CCQ (pour « Compteur d'eau Communicant de Quartier ») et des compteurs d'eau secondaires CCi (pour « Compteur d'eau Communicant »).
Le compteur d'eau principal CCQ est raccordé au conduit principal 3. Un compteur d'eau secondaire CCi distinct est raccordé à chaque conduit secondaire 4. La variable i varie de 1 à N, N étant le nombre de conduits secondaires 4 et donc de compteurs d'eau secondaires CCi.
Les conduits secondaires 4 sont issus du conduit principal 3, c'est-à-dire qu'ils sont tous connectés au conduit principal 3 en aval du compteur d'eau principal CCQ : le conduit principal 3 se divise, en aval du compteur d'eau principal CCQ, en un faisceau formé par les conduits secondaires 4.
Ici, par « en amont », on entend du côté du réseau de distribution d'eau, et par « en aval », on entend du côté des installations d'eau 5.
Chaque compteur d'eau 7 comporte un deuxième module de communication 14 qui lui permet de communiquer via une communication radio utilisant le protocole LoRa (pour *Long Range*). Chaque compteur d'eau 7 comporte aussi un deuxième module de traitement 15 comprenant au moins un deuxième composant de traitement adapté à exécuter des instructions d'un programme. Le deuxième composant de traitement est par exemple un processeur, un microcontrôleur, ou bien un circuit logique programmable tel qu'un FPGA ou un ASIC.
Le procédé selon l'invention vise à évaluer une quantité d'eau perdue dans le réseau de distribution d'eau 1 entre le compteur d'eau principal CCQ et les compteurs d'eau secondaires CCi, c'est à dire dans la zone du réseau de distribution d'eau 1 située en aval du compteur d'eau principal CCQ et en amont de chacun des compteurs d'eau secondaires CCi.
Le procédé comprend un certain nombre d'étapes, qui sont répétées par périodes de mesure successives découpées chacune en intervalles temporels. Ici, une période de mesure a pour durée un jour (et débute à minuit), et chaque intervalle temporel a pour durée une heure. Chaque période de mesure comprend ainsi 24 intervalles temporels.
Pour chaque intervalle temporel d'une période de mesure donnée j, c'est-à-dire pour chaque heure d'un jour donné j, et pour chaque compteur d'eau secondaire CCi, le premier module de traitement 11 du serveur d'application 8 du SI 6 acquiert une mesure secondaire réalisée par ledit compteur d'eau secondaire CCi et représentative d'une quantité d'eau distribuée via le conduit secondaire 4 auquel est raccordé ledit compteur d'eau secondaire CCi au cours dudit intervalle temporel. Les mesures secondaires sont transmises par le deuxième module de communication 14 du compteur d'eau secondaire CCi au premier module de communication 10 du SI 6 via l'une des passerelles Gm.

Ces mesures secondaires sont incluses dans une courbe de charge notée Chi que le premier module de traitement 11 reçoit chaque jour, plusieurs fois par jour, de chaque compteur d'eau secondaire CCi. La courbe de charge Chi est composée d'un index de référence noté $Ci_j$, et de deltas d'index successifs notés $\Delta i_{j\_1}$ à $\Delta i_{j\_23}$.

Chaque delta d'index $\Delta i_{j\_k}$ est une mesure secondaire réalisée par le compteur d'eau secondaire CCi pour le jour donné j. Cette mesure secondaire est représentative d'une quantité d'eau qui est distribuée au cours du $(k+1)^{\text{ème}}$ intervalle temporel, via le conduit secondaire 4 auquel est raccordé ledit compteur d'eau secondaire CCi, à l'installation d'eau 5 reliée audit conduit secondaire 4. Les mesures secondaires sont ici des volumes d'eau (exprimés en xxx,xxx $m^3$).

Ainsi, par exemple, entre 2h et 3h du matin, c'est-à-dire au cours du troisième intervalle temporel du jour donné j, le compteur d'eau secondaire CCi a mesuré qu'une quantité d'eau égale à $\Delta i_{j\_2}$ a été distribuée via le conduit secondaire 4 auquel il est raccordé.

L'index de référence $Ci_j$, quant à lui, est une mesure secondaire totale représentative d'une quantité d'eau distribuée via le conduit secondaire 4 auquel est raccordé le compteur d'eau secondaire CCi jusqu'au début du jour donné j .

Le premier module de traitement 11 acquiert aussi, pour le jour suivant j+1 qui suit le jour donné j, et pour chaque compteur d'eau secondaire CCi, la mesure secondaire totale $Ci_{j+1}$ représentative d'une quantité d'eau distribuée via le conduit secondaire 4 auquel est raccordé le compteur d'eau secondaire CCi jusqu'au début du jour j+1 suivant le jour donné j.

Pour chaque intervalle temporel du jour donné j, le premier module de traitement 11 acquiert aussi une courbe de charge ChQ qui est composée d'un index de référence noté $CQ_j$, et de deltas d'index successifs notés $\Delta CCQ_{j\_1}$ à $\Delta CCQ_{j\_23}$.

Chaque delta d'index $\Delta CCQ_{j\_k}$ est une mesure principale réalisée par le compteur d'eau principal CCQ. Cette mesure principale est représentative d'une quantité d'eau qui est distribuée au cours du $(k+1)^{\text{ème}}$ intervalle temporel, via le conduit principal 3. Les mesures principales sont des volumes d'eau (exprimés en xxx,xxx $m^3$). Les mesures principales sont transmises par le deuxième module de communication 14 du compteur d'eau principal CCQ au premier module de communication 10 du SI 6 via l'une des passerelles Gm.

L'index de référence $CQ_j$, quant à lui, est une mesure principale totale représentative d'une quantité d'eau distribuée via le conduit principal 3 jusqu'au début du jour donné j.

Le premier module de traitement 11 acquiert aussi, pour le jour suivant j+1 qui suit le jour donné j, la mesure principale totale $CQ_{j+1}$ représentative d'une quantité d'eau distribuée via le conduit principal 3 jusqu'au début du jour j+1 suivant le jour donné j.

On note que pour chaque compteur d'eau secondaire CCi, le premier module de traitement 11 ne reçoit pas directement la première mesure secondaire représentative d'une quantité d'eau distribuée via le conduit secondaire 4 auquel est raccordé ledit compteur d'eau secondaire CCi au cours du premier intervalle temporel de la période de mesure donnée (c'est-à-dire entre minuit et 1h du matin du jour donné j).

Cette première mesure secondaire $\Delta i_{j\_0}$ est évaluée en utilisant la formule suivante :

$$\Delta \mathbf{i}_{j\_0} = \boldsymbol{Ci}_{j+1} - (\boldsymbol{Ci}_j + \sum_{k=1}^{k=K-1} \Delta \mathbf{i}_{j\_k}) \quad \text{où :}$$

- K est le nombre d'intervalles temporels dans chaque période de mesure (ici, K=24) ;
- $\Delta i_{j\_0}$ est la première mesure secondaire ;
- $Ci_j$ est la mesure secondaire totale représentative d'une quantité d'eau distribuée via le conduit secondaire 4 auquel est raccordé le compteur d'eau secondaire CCi jusqu'au début de la période de mesure donnée (c'est à dire du jour donné j) ;
- $Ci_{j+1}$ est la mesure secondaire totale représentative d'une quantité d'eau distribuée via le conduit secondaire 4 auquel est raccordé ledit compteur d'eau secondaire CCi jusqu'au début de la période de mesure suivant la période de mesure donnée (c'est-à-dire du jour j+1) ;
- les $\Delta i_{j\_k}$ sont les mesures secondaires pour les intervalles temporels de la période de mesure donnée suivant le premier intervalle temporel.

De même, le premier module de traitement 11 ne reçoit pas directement la première mesure principale, représentative d'une quantité d'eau distribuée via le conduit principal 3 au cours du premier intervalle temporel de la période de mesure donnée.

La première mesure principale est évaluée en utilisant la formule suivante :

$$\Delta CCQ_{j\_0} = CQ_{j+1} - (CQ_j + \sum_{k=1}^{k=K-1} \Delta CCQ_{j\_k}) \text{ où :}$$

- K est le nombre d'intervalles temporels dans chaque période de mesure (ici K=24) ;
- $\Delta CCQ_{j\_0}$ est la première mesure principale ;
- $CQ_j$ est une mesure principale totale représentative d'une quantité d'eau distribuée via le conduit principal jusqu'au début de la période de mesure donnée ;
- $CQ_{j+1}$ est une mesure principale totale représentative d'une quantité d'eau distribuée via le conduit principal jusqu'au début de la période de mesure suivant la période de mesure donnée ;
- les $\Delta CCQ_{j\_k}$ sont les mesures principales pour les intervalles temporels de la période de mesure donnée suivant le premier intervalle temporel.

Le premier module de traitement 11 calcule alors, pour chaque intervalle temporel de la période de mesure donnée, une différence de mesures égale à une différence entre la mesure principale (réalisée par le compteur d'eau principal) et la somme des mesures secondaires (réalisées chacune par l'un des compteurs d'eau secondaires).

Le premier module de traitement 11 détermine ensuite une valeur minimum des différences de mesures sur la période de mesure donnée.

Pour le jour donné j, la valeur minimum des différences de mesures est donc égale à :

$$VP = Min_{k=0 \text{ à } k=K-1} (\Delta CCQ_{j\_k} - \sum_{i=1}^{i=N} \Delta i_{j\_k})$$

On rappelle que N est le nombre de compteurs d'eau secondaires CCi « raccordés » au compteur d'eau principal CCQ.

On considère qu'en cas de fuite, les pertes d'eau sont continues. Le premier module de traitement 11 évalue, à partir de la valeur minimum, la quantité d'eau perdue sur la période de mesure donnée, c'est-à-dire le volume quotidien de perte d'eau.

La quantité d'eau perdue sur la période de mesure donnée est égale à la valeur minimum multipliée par le nombre d'intervalles temporels contenus dans la période de mesure donnée.

On a donc :

VQ = K.VP, soit pour K=24, VQ = 24.VP

où VQ est la quantité d'eau perdue sur la période de mesure donnée, c'est-à-dire sur le jour donné j, et où VP est la valeur minimum des différences de mesures.

Le premier module de traitement 11 détermine ainsi le volume quotidien de perte d'eau dans le quartier 2 du compteur d'eau principal CCQ.

La valeur minimum des différences de mesures, obtenue typiquement pendant la nuit, est une estimation très précise de la quantité d'eau perdue pendant une durée égale à la durée d'un intervalle temporel.

On sait en effet que, comme une fuite d'eau est un phénomène durable, continu, et de débit sensiblement constant, les quantités d'eau détectées au-dessus de la valeur minimum correspondent soit à du tirage d'eau (par les services publics typiquement), soit à du vol d'eau. La prise en compte de la valeur minimum des différences de mesures permet donc d'exclure de l'estimation les tirages d'eau et les vols d'eau.

Le premier module de traitement 11 compare alors le volume quotidien de perte d'eau avec un seuil prédéterminé VS. Le seuil prédéterminé VS est ici un seuil paramétrable.

Une perte d'eau limitée est un phénomène normal et courant dans un réseau de distribution d'eau. En général, on observe dans un réseau de distribution d'eau une perte d'eau « nominale » comprise entre 5 et 10% de l'eau distribuée.

Cependant, si le volume quotidien de perte d'eau est supérieur au seuil prédéterminé, le premier module de traitement 11 détecte que la perte d'eau est anormale et que cette perte d'eau est possiblement synonyme d'une fuite d'eau importante et problématique. Le premier module de traitement 11 produit un message d'alarme pour programmer une intervention permettant de réparer l'élément endommagé du réseau à l'origine de la fuite.

Bien entendu, l'invention n'est pas limitée au mode de réalisation décrit mais englobe toute variante entrant dans le champ de l'invention telle que définie par les revendications.

Le procédé selon l'invention pourrait être mis en oeuvre entièrement ou partiellement dans un dispositif autre que le SI, et par exemple dans une passerelle, dans un concentrateur de données, dans un compteur de fluide communicant de quartier, etc.

Les périodes de mesure ne sont pas nécessairement des jours, et les intervalles temporels ne sont pas nécessairement des heures.

Les communications entre les compteurs, les passerelles et le SI pourraient être réalisées en utilisant tout type de technologie de communication et tout type de protocole.

L'invention pourrait être mise en oeuvre dans un réseau de distribution d'un fluide autre que l'eau : gaz, pétrole, etc.

**Revendications**

1. Procédé d'évaluation d'une quantité de fluide perdue dans un réseau de distribution de fluide (1) comprenant un conduit principal (3) auquel est raccordé un compteur de fluide principal (CCQ), et des conduits secondaires (4) issus du conduit principal (3) et auxquels sont raccordés des compteurs de fluide secondaires (CCi), le procédé d'évaluation comprenant les étapes suivantes, répétées par périodes de mesure successives découpées chacune en intervalles temporels, de :

   - pour chaque intervalle temporel d'une période de mesure donnée, acquérir une mesure principale réalisée par le compteur de fluide principal (CCQ) et représentative d'une quantité de fluide distribuée via le conduit principal (3) au cours dudit intervalle temporel, et, pour chaque compteur de fluide secondaire (CCi), acquérir une mesure secondaire réalisée par ledit compteur de fluide secondaire et représentative d'une quantité de fluide distribuée via le conduit secondaire (4) auquel est raccordé ledit compteur de fluide secondaire au cours dudit intervalle temporel ;
   - calculer, pour chaque intervalle temporel de la période de mesure donnée, une différence de mesures égale à une différence entre la mesure principale et la somme des mesures secondaires ;
   - déterminer une valeur minimum des différences de mesures sur la période de mesure donnée ;
   - évaluer la quantité de fluide perdue sur la période de mesure donnée à partir de la valeur minimum.

2. Procédé selon la revendication 1, dans lequel l'évaluation de la quantité de fluide perdue sur la période de mesure donnée est égale à la valeur minimum multipliée par le nombre d'intervalles temporels contenus dans la période de mesure donnée.

3. Procédé selon l'une des revendications précédentes, dans lequel, pour chaque compteur de fluide secondaire (CCi), on évalue une première mesure secondaire, représentative d'une quantité de fluide distribuée via le conduit secondaire (4) auquel est raccordé ledit compteur de fluide secondaire (CCi) au cours du premier intervalle temporel de la période de mesure donnée, en utilisant la formule suivante :

$$\Delta i_{j\_0} = Ci_{j+1} - \left( Ci_j + \sum_{k=1}^{k=K-1} \Delta i_{j\_k} \right)$$

où :

   - j est la période de mesure donnée ;
   - K est le nombre d'intervalles temporels dans chaque période de mesure ;
   - $\Delta i_{j\_0}$ est la première mesure secondaire ;
   - $Ci_j$ est une mesure secondaire totale représentative d'une quantité de fluide distribuée via le conduit secondaire (4) auquel est raccordé ledit compteur de fluide secondaire jusqu'au début de la période de mesure donnée ;
   - $Ci_{j+i}$ est une mesure secondaire totale représentative d'une quantité de fluide distribuée via le conduit secondaire auquel est raccordé ledit compteur de fluide secondaire jusqu'au début de la période de mesure suivant la période de mesure donnée ;
   - les $\Delta i_{j\_k}$ sont les mesures secondaires pour les intervalles temporels de la période de mesure donnée suivant le premier intervalle temporel.

4. Procédé selon l'une des revendications précédentes, dans lequel, pour le compteur de fluide principal (CCQ), on évalue une première mesure principale, représentative d'une quantité de fluide distribuée via le conduit principal (3) au cours du premier intervalle temporel de la période de mesure donnée, en utilisant la formule suivante :

$$\Delta CCQ_{j\_0} = CQ_{j+1} - \left( CQ_j + \sum_{k=1}^{k=K-1} \Delta CCQ_{j\_k} \right)$$

7

où :

- j est la période de mesure donnée ;
- K est le nombre d'intervalles temporels dans chaque période de mesure ;
- $\Delta CCQ_{j\_0}$ est la première mesure principale ;
- $CQ_j$ est une mesure principale totale représentative d'une quantité de fluide distribuée via le conduit principal jusqu'au début de la période de mesure donnée ;
- $CQ_{j+1}$ est une mesure principale totale représentative d'une quantité de fluide distribuée via le conduit principal jusqu'au début de la période de mesure suivant la période de mesure donnée ;
- les $\Delta CCQ_{j\_k}$ sont les mesures principales pour les intervalles temporels de la période de mesure donnée suivant le premier intervalle temporel.

5. Procédé selon l'une des revendications précédentes, dans lequel chaque période de mesure a pour durée un jour et dans lequel chaque intervalle temporel a pour durée une heure.

6. Procédé selon l'une des revendications précédentes, le compteur de fluide principal (CCQ) et les compteurs de fluide secondaires (CCi) étant des compteurs d'eau.

7. Dispositif comprenant un module de communication (10) agencé pour recevoir les mesures principales réalisées par le compteur de fluide principal (CCQ) et les mesures secondaires réalisées par les compteurs de fluide secondaires (CCi), ainsi qu'un module de traitement (11) agencé pour mettre en oeuvre le procédé selon l'une des revendications précédentes.

8. Dispositif selon la revendication 7, le dispositif étant un Système d'Information (6) ou une passerelle (Gm) ou un concentrateur de données ou un compteur de fluide communicant de quartier (CCQ).

9. Programme d'ordinateur comprenant des instructions qui conduisent le dispositif selon l'une des revendications 7 et 8 à exécuter les étapes du procédé selon l'une des revendications 1 à 6.

10. Support d'enregistrement lisible par ordinateur, sur lequel est enregistré le programme d'ordinateur selon la revendication 9.


**Patentansprüche**

1. Verfahren zum Evaluieren einer Fluidmenge, die in einem Fluidverteilungsnetz (1) verloren geht, das eine Hauptleitung (3) umfasst, an die ein Hauptfluidzähler (CCQ) angeschlossen ist, sowie sekundäre Leitungen (4), die von der Hauptleitung (3) abgehen und an die sekundäre Fluidzähler (CCi) angeschlossen sind, wobei das Evaluierungsverfahren die folgenden Schritte umfasst, die über aufeinanderfolgende Messperioden, die jeweils in Zeitintervalle unterteilt sind, wiederholt werden:

- für jedes Zeitintervall einer gegebenen Messperiode, Erfassen einer Hauptmessung, die von dem Hauptfluidzähler (CCQ) durchgeführt wird und repräsentativ für eine Fluidmenge ist, die über die Hauptleitung (3) während des genannten Zeitintervalls verteilt wird, und für jeden sekundären Fluidzähler (CCi), Erfassen einer sekundären Messung, die von dem genannten sekundären Fluidzähler durchgeführt wird und repräsentativ für eine Fluidmenge ist, die über die sekundäre Leitung (4) verteilt wird, an die der genannte sekundäre Fluidzähler während des genannten Zeitintervalls angeschlossen ist;
- Berechnen einer Messdifferenz, die gleich einer Differenz zwischen der Hauptmessung und der Summe der sekundären Messungen ist, für jedes Zeitintervall der gegebenen Messperiode;
- Bestimmen eines Mindestwerts der Messdifferenzen über die gegebene Messperiode;
- Evaluieren der Fluidmenge, die über die gegebene Messperiode verloren geht, anhand des Mindestwerts.

2. Verfahren nach Anspruch 1, bei dem die Evaluierung der Fluidmenge, die über die gegebene Messperiode verloren geht, gleich dem Mindestwert ist, multipliziert mit der Anzahl an Zeitintervallen, die in der gegebenen Messperiode enthalten sind.

3. Verfahren nach einem der vorhergehenden Ansprüche, bei dem für jeden sekundären Fluidzähler (CCi) eine erste sekundäre Messung evaluiert wird, die repräsentativ für eine Fluidmenge ist, die über die sekundäre Leitung (4), an die der genannte sekundäre Fluidzähler (CCi) angeschlossen ist, während des ersten Zeitintervalls der gegebenen Messperiode verteilt wird, indem die folgende Formel verwendet wird:

$$\Delta \mathbf{i}_{j\_0} = Ci_{j+1} - \left(Ci_j + \sum_{k=1}^{k=K-1} \Delta \mathbf{i}_{j\_k}\right),$$

wobei:

- j die gegebene Messperiode ist;
- K die Anzahl an Zeitintervallen in jeder Messperiode ist;
- $\Delta i_{j\_0}$ die erste sekundäre Messung ist;
- $Ci_j$ eine gesamte sekundäre Messung ist, die repräsentativ für eine Fluidmenge ist, die über die sekundäre Leitung (4), an die der genannte sekundäre Fluidzähler angeschlossen ist, bis zum Beginn der gegebenen Messperiode verteilt wird;
- $Ci_{j+1}$ eine gesamte sekundäre Messung ist, die repräsentativ für eine Fluidmenge ist, die über die sekundäre Leitung, an die der genannte sekundäre Fluidzähler angeschlossen ist, bis zum Beginn der Messperiode, die auf die gegebene Messperiode folgt, verteilt wird;
- die $\Delta i_{j\_k}$ die sekundären Messungen für die Zeitintervalle der gegebenen Messperiode sind, die auf das erste Zeitintervall folgen.

4. Verfahren nach einem der vorhergehenden Ansprüche, bei dem für den Hauptfluidzähler (CCQ) eine erste Hauptmessung evaluiert wird, die repräsentativ für eine Fluidmenge ist, die über die Hauptleitung (3) während des ersten Zeitintervalls der gegebenen Messperiode verteilt wird, indem die folgende Formel verwendet wird:

$$\Delta CCQ_{j\_0} = CQ_{j+1} - \left(CQ_j + \sum_{k=1}^{k=K-1} \Delta CCQ_{j\_k}\right),$$

wobei

- j die gegebene Messperiode ist;
- K die Anzahl an Zeitintervallen in jeder Messperiode ist;
- $ACCQ_{j\_0}$ die erste Hauptmessung ist;
- $CQ_j$ eine gesamte Hauptmessung ist, die repräsentativ für eine Fluidmenge ist, die über die Hauptleitung bis zum Beginn der gegebenen Messperiode verteilt wird;
- $CQ_{j+1}$ eine gesamte Hauptmessung ist, die repräsentativ für eine Fluidmenge ist, die über die Hauptleitung bis zum Beginn der Messperiode, die auf die gegebene Messperiode folgt, verteilt wird;
- die $\Delta CCQ_{j\_k}$ die Hauptmessungen für die Zeitintervalle der gegebenen Messperiode sind, die auf das erste Zeitintervall folgen.

5. Verfahren nach einem der vorhergehenden Ansprüche, bei dem jede Messperiode eine Dauer von einem Tag und bei dem jedes Zeitintervall eine Dauer von einer Stunde hat.

6. Verfahren nach einem der vorhergehenden Ansprüche, wobei der Hauptfluidzähler (CCQ) und die sekundären Fluidzähler (CCi) Wasserzähler sind.

7. Vorrichtung, umfassend ein Kommunikationsmodul (10), das ausgebildet ist, die Hauptmessungen zu empfangen, die von dem Hauptfluidzähler (CCQ) durchgeführt werden, sowie die sekundären Messungen, die von den sekundären Fluidzählern (CCi) durchgeführt werden, und ein Verarbeitungsmodul (11), das ausgebildet ist, das Verfahren nach einem der vorhergehenden Ansprüche durchzuführen.

8. Vorrichtung nach Anspruch 7, wobei die Vorrichtung ein Informationssystem (6) oder ein Gateway (Gm) oder ein Datenkonzentrator oder ein intelligenter Fluidzähler (CCQ) eines Stadtviertels ist.

9. Computerprogramm, umfassend Anweisungen, die die Vorrichtung nach einem der Ansprüche 7 und 8 dazu veranlassen, die Schritte des Verfahrens nach einem der Ansprüche 1 bis 6 auszuführen.

10. Computerlesbarer Aufzeichnungsträger, auf dem das Computerprogramm nach Anspruch 9 gespeichert ist.

**Claims**

1.  An evaluation method for evaluating the quantity of fluid that is lost in a fluid distribution network (1) that comprises a main pipe (3) to which a main fluid meter (CCQ) is connected, and secondary pipes (4) depending from the main pipe (3) and to which secondary fluid meters (CCi) are connected, the evaluation method comprising the following steps that are repeated over successive measurement periods, themselves subdivided into time intervals:

    · for each time interval of a given measurement period, acquiring a main measurement taken by the main fluid meter (CCQ) and representative of a quantity of fluid distributed via the main pipe (3) during said time interval, and, for each secondary fluid meter (CCi), acquiring a secondary measurement taken by said secondary fluid meter and representative of a quantity of fluid that is distributed during said time interval via the secondary pipe (4) to which said secondary fluid meter is connected;
    · for each time interval of the given measurement period, calculating a measurement difference equal to a difference between the main measurement and the sum of the secondary measurements;
    · determining a minimum value of the measurement differences over the given measurement period;
    · evaluating the quantity of fluid lost over the given measurement period on the basis of the minimum value.

2.  A method according to claim 1, wherein the quantity of fluid that is lost over the given measurement period is evaluated as being equal to the minimum value multiplied by the number of time intervals contained in the given measurement period.

3.  A method according to any preceding claim, wherein, for each secondary fluid meter (CCi), a first secondary measurement representative of a quantity of fluid that is distributed during the first time interval of the given measurement period via the secondary pipe (4) to which said secondary fluid meter (CCi) is connected is evaluated by using the following formula:

$$\Delta \mathbf{i}_{j\_0} = Ci_{j+1} - (Ci_j + \sum_{k=1}^{k=K-1} \Delta \mathbf{i}_{j\_k})$$

where:

   · $j$ is the given measurement period;
   · $K$ is the number of time intervals in each measurement period;
   · $\Delta i_{j\_0}$ is the first secondary measurement;
   · $Ci_j$ is a total secondary measurement representative of the total quantity of fluid distributed via the secondary pipe (4) to which said secondary fluid meter is connected up to the beginning of the given measurement period;
   · $Ci_{j+1}$ is a total secondary measurement representative of the total quantity of fluid distributed via the secondary pipe to which said secondary fluid meter is connected up to the beginning of the measurement period following the given measurement period;
   · $\Delta i_{j\_k}$ are the secondary measurements for the time intervals of the given measurement period following the first time interval.

4.  A method according to any preceding claim, wherein, for the main fluid meter (CCQ), a first main measurement representative of a quantity of fluid distributed via the main pipe (3) during the first time interval of the given measurement period is evaluated by using the following formula:

$$\Delta CCQ_{j\_0} = CQ_{j+1} - (CQ_j + \sum_{k=1}^{k=K-1} \Delta CCQ_{j\_k})$$

where:

   · $j$ is the given measurement period;
   · $K$ is the number of time intervals in each measurement period;
   · $\Delta CCQ_{j\_0}$ is the first main measurement;
   · $CQ_j$ is a total main measurement representative of the total quantity of fluid distributed via the main pipe up to the beginning of the given measurement period;
   · $CQ_{j+1}$ is a total main measurement representative of the total quantity of fluid distributed via the main pipe up to the beginning of the measurement period following the given measurement period;

· $\Delta CCQ_{j\_k}$ are the main measurements for the time intervals of the given measurement period following the first time interval.

5. A method according to any preceding claim, wherein each measurement period has a duration of one day, and wherein each time interval has a duration of one hour.

6. A method according to any preceding claim, the main fluid meter (CCQ) and the secondary fluid meters (CCi) being water meters.

7. A device comprising both a communication module (10) arranged to receive the main measurements taken by the main fluid meter (CCQ) and the secondary measurements taken by the secondary fluid meters (CCi), and also a processor module (11) arranged to perform the method according to any preceding claim.

8. A device according to claim 7, the device being an information system (6) or a gateway (Gm) or a data concentrator or a district smart fluid meter (CCQ).

9. A computer program including instructions for causing the device according to claim 7 or claim 8, to execute the steps of the method according to any one of claims 1 to 6.

10. A computer readable storage medium having stored thereon the computer program according to claim 9.

Fig. 1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 0188911 A